# EUROPÄISCHE PATENTANMELDUNG

(11) **EP 0 572 868 A1**
(43) Veröffentlichungstag der Anmeldung: **08.12.1993**
(21) Anmeldenummer: 93108164.0
(22) Anmeldetag: 19.05.1993
(51) Int. Cl.: B60M 1/20

(54) **Fahrleitungsstützpunkt**

(30) Priorität: 03.06.1992 DE 9207519 U
(71) Anmelder: SIEMENS AKTIENGESELLSCHAFT, D-80333 München (DE)
(72) Erfinder: Menhorn, Hermann, W-2410 Mölln (DE)

(57) **Zusammenfassung**

Fahrleitungsstützpunkt (1), der einen an einer Decke (3) eines Bauwerks befestigbaren Grundkörper (11) und eine in diesem einseitig gehalterte Haltesäule (6) umfaßt, die im wesentlichen aus einem Rohr (10) für die Halterung eines Isolators (9) mit einer an diesem befestigten Fahrdrahtklemme (7) besteht. Die Haltesäule (6) weist eine Neigungsverstelleinrichtung (14) auf, durch die die Fahrdrahtklemme (7) in der Ebene, die von der Längsachse der Haltesäule (6) und der Mittelsenkrechten der Fahrebene gebildet wird, in ihrer Neigung festlegbar ist. Dadurch ist ein in der Fahrdrahtklemme (7) gehaltener Fahrdraht (2) auf einfache Weise auf Gleisüberhöhungen ausrichtbar.

## Beschreibung

Die Erfindung bezieht sich auf einen Fahrleitungsstützpunkt gemäß Oberbegriff des Anspruchs 1.

Derartige Fahrleitungsstützpunkte sind z.B. aus der EP-B- 0 111 730 bekannt. Die Fahrleitungsstützpunkte dienen hierbei dazu, einen profilierten Fahrdraht, der einen ununterbrochenen Strang bildet und als von unten bestrichene Stromschiene ausgebildet ist, in Längsrichtung unverschieblich an einer Decke eines Bauwerks, vorzugsweise eines Tunnels, aufzuhängen. Um der Funktion einer Fahrleitung gerecht zu werden, müssen die Fahrleitungsstützpunkte mit ihrer Längsachse möglichst parallel zur Mittelsenkrechten auf die Fahrebene, das ist bei Bahnen die Ebene zwischen den Oberkanten der Schienen, ausgerichtet werden. Die Lage der Mittelsenkrechten auf die Fahrebene ist aufgrund von Gleisüberhöhungen im allgemeinen nicht lotrecht. Darüber hinaus sind bei der Montage der Fahrleitungsstützpunkte auch Toleranzen im Bauwerk sowie die Bauart der jeweiligen Anlage zu berücksichtigen. Im bekannten Fall ist die Haltesäule zum Ausgleich geringer Toleranzen sowie zur Höhenfeineinstellung im Grundkörper in ihrer Höhe verstellbar und mittels einer Stellschraube fixierbar sowie durch einen Zentrierstift in der Endlage arretierbar.

Aufgabe der vorliegenden Erfindung ist es, einen Fahrleitungsstützpunkt der eingangs genannten Art zu schaffen, dessen Fahrdrahtklemme mit dem darin gehaltenen Fahrdraht auf einfache Weise auf Gleisüberhöhungen ausrichtbar ist.

Die Aufgabe wird erfindungsgemäß durch die im Kennzeichen des Anspruchs 1 angegebenen Merkmale gelöst.

Der erfindungsgemäße Fahrleitungsstützpunkt besteht aus einem Grundkörper, der an der Decke eines Bauwerks, z.B. Tunnel, montiert wird. Im Grundkörper ist eine Haltesäule einseitig gehaltert. Die Haltesäule besteht im wesentlichen aus einem Rohr für die Halterung eines Isolators, an dem eine Fahrdrahtklemme befestigt ist, sowie einer Neigungsverstelleinrichtung. Durch die Neigungsverstelleinrichtung ist die Haltesäule in der Ebene, die von der Längsachse der Haltesäule und der Mittelsenkrechten der Fahrebene gebildet wird, in ihrer Neigung festlegbar. Damit ist bei einem Fahrleitungsstützpunkt nach Anspruch 1 die Lage des Fahrdrahts auf einfache Weise an die auftretenden Gleisüberhöhungen anpaßbar.

Vorteilhafte Ausgestaltungen der Erfindung sind in den weiteren Ansprüchen angegeben.

Abhängig von den auszugleichenden Gleisüberhöhungen und den dafür erforderlichen Neigungswinkeln kann wegen der Haltesäule integrierte Neigungsverstelleinrichtung sowohl zwischen dem Rohr und dem Isolator (Anspruch 2) als auch zwischen dem Isolator und der Fahrdrahtklemme (Anspruch 3) angeordnet sein. Je näher die Neigungsverstelleinrichtung an der Grundplatte angeordnet ist, desto größer ist der mögliche, auf einem Kreisbogen liegende Verstellbereich für die Fahrdrahtklemme.

Bei einer Ausbildung der Neigungsverstelleinrichtung als im wesentlichen zweiteilige Neigungsverstellklemme (Ansprüche 4 und 5) ist eine einfache Vormontage der beiden Klemmenteile an den jeweiligen Einzelteilen der Haltesäule möglich.

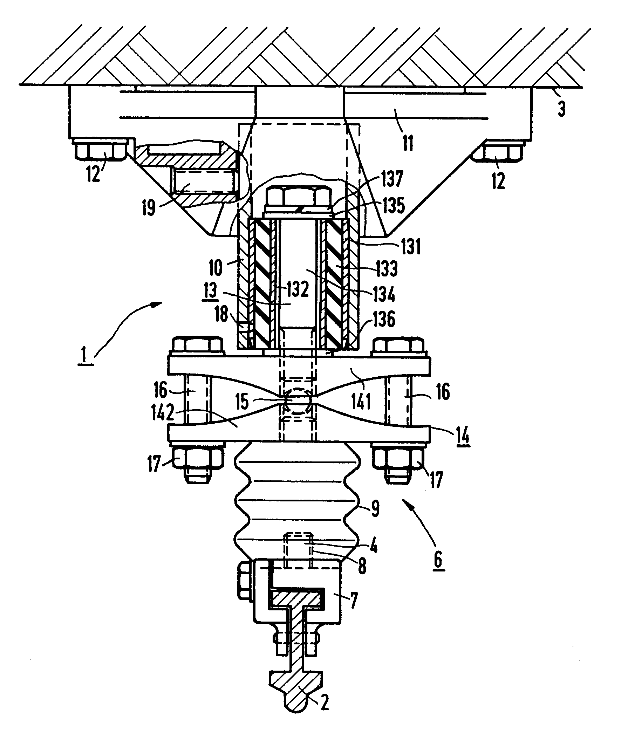

Weitere Vorteile und Einzelheiten der Erfindung ergeben sich aus der nachfolgenden Beschreibung eines Ausführungsbeispiels anhand der Zeichnung und in Verbindung mit den Ansprüchen 2 bis 8.

In der Zeichnung ist ein Fahrleitungsstützpunkt 1 dargestellt, der im gezeigten Ausführungsbeispiel zur unverschieblichen Aufhängung eines als Stromschiene ausgebildeten Fahrdrahts 2 an einer Tunneldecke 3 dient. Die hochkant angeordnete profilierte Stromschiene 2 ist in gewundener Form an mehreren derartigen Fahrleitungsstützpunkten 1 in Längsrichtung an der Tunneldecke 3 unverschieblich aufgehängt. Die gewundene Form wird dadurch erreicht, daß die Stromschiene 2 zwischen den aufeinanderfolgenden, unverschieblichen Fahrleitungsstützpunkten 1 jeweils seitlich ausgebogen ist, so daß eine Zick-Zack-Form entsteht, wobei die Fahrleitungsstützpunkte 1 in der Fahrachse liegen oder nach Art einer Sinuslinie an der Tunneldecke 3 befestigt sein können, um dadurch eine gleichmäßige Abnutzung des Stromabnehmerschleifstücks auf seiner Breite zu erzielen.

Der Fahrleitungsstützpunkt 1 besteht aus einer in einem Grundkörper 11 einseitig gehalterten Haltesäule 6. Die Haltesäule 6 umfaßt im wesentlichen ein Rohr 10, das an seinem freien Ende im Grundkörper 11 befestigt ist und an dessen freiem Ende ein Isolator 9 angeordnet ist. An dem Isolator 9 ist eine Stromschienenklemme 7 mit einer daran angegossenen senkrechten Achse 4 befestigt. Die Fahrdrahtklemme 7, der Isolator 9 sowie das Rohr 10 sind um diese senkrechte Achse 4 gegeneinander drehbar. In einfachster Weise ist die senkrechte Achse 4 aus einem an der Stromschienenklemme 7 angegossenen Gewindebolzen gebildet, der in eine als Lager 8 dienende Gewindebohrung im Isolator 9 eingedreht ist und dort Drehbewegungen ausführen kann.

Der Grundkörper 11 (Ankerplatte) wird mittels zweier Befestigungsschrauben 12 an der Tunneldecke 3 fest angeschraubt.

In dem Rohr 10 ist eine Dämpfungseinrichtung 13 gehalten, die zur Dämpfung der auf die Stromschiene 2 übertragenen Schwingungen dient.

Zwischen dem Isolator 9 und der aus dem Rohr 10 teilweise herausragenden Dämpfungseinrichtung 13 ist eine Neigungsverstelleinrichtung 14 angeordnet. Die Neigungsverstelleinrichtung 14 ist im vorliegenden Ausführungsbeispiel als Neigungsverstellklemme ausgebildet. Durch die Neigungsverstellklemme 14 ist die am Isolator 9 befestigte Stromschienenklemme 7 und damit die Stromschiene 2 stufenlos in der Ebene, die von der Längsachse der Haltesäule 6 und der Mittelsenkrechten der Fahrebene gebildet wird, in ihrer Neigung festlegbar. Die Neigungsverstellklemme 14 ist hierzu um einen in der Längsrichtung der Stromschiene 2 liegenden Bolzen 15 schwenkbar und durch Schrauben 16 und Spannmuttern 17 in ihrer gewünschten Neigung festlegbar. Dadurch ist die Stromschiene 2 in ihrer Lage auf einfache Weise an die auftretenden Gleisüberhöhungen (nicht lotrechte Lage der Mittelsenkrechten auf die Fahrebene) anpaßbar. Durch die Neigungsverstellklemme 14 können darüber hinaus bei der Montage des Fahrleitungsstützpunktes 1 auch Toleranzen im Bauwerk sowie die Bauart der jeweiligen Anlage (Rundtunnel, offene Bauweise usw.) auf einfache Weise berücksichtigt werden.

Die Dämpfungseinrichtung 13 ist im gezeigten Ausführungsbeispiel als Metallgummibuchse (Megibuchse) ausgebildet und im Preßsitz im Rohr 10 gehalten sowie durch einen Justierkörperstift 18 in ihrer axialen Lage im Rohr 10 gesichert. Die Megibuchse 13 besteht aus einem äußeren Stahlmantel 131 und einem inneren Stahlkern 132 sowie einer dazwischenliegenden Gummischicht 133. Der Stahlkern 132 weist eine Durchgangsbohrung auf, in die eine Verbindungsschraube 134 bis zu ihrem Schraubenkopf einsteckbar ist.

Die Megibuchse 13 ist an ihren Stirnseiten von jeweils einer Abdeckscheibe 135 bzw.136 abgedeckt. Die auf der oberen Stirnseite aufliegende Abdeckscheibe 135 weist eine Durchgangsbohrung auf, wohingegen die an der unteren Stirnseite anliegende Abdeckscheibe 136 eine Gewindebohrung aufweist, in welche der Gewindestift der Verwindungsschraube 134 nach unten überstehend eingeschraubt ist. Zur Sicherung der Verbindungsschraube 134 gegen ein Verdrehen ist zwischen der Abdeckscheibe 135 und dem Kopf der Verbindungsschraube 134 eine Federscheibe 137 vorgesehen.

Die nach unten überstehende Verbindungsschraube 134 ist in dem dargestellten Beispiel in eine Gewindebohrung der Neigungsverstellklemme 14 eingeschraubt. Es ist jedoch auch möglich, den nach unten überstehenden Teil der Verbindungsschraube 134 direkt in eine Gewindebohrung des Isolators 9 einzuschrauben. Die Neigungsverstellklemme 14 wäre dann zwischen der Stromschienenklemme 7 und dem Isolator 9 auf die gleiche, vorstehend beschriebene Art anzuordnen.

In beiden Fällen werden die auftretenden Schwingungen und Stöße durch die Abdeckscheibe 136 auf den inneren Stahlkern 132 übertragen. Da sich die Abdeckscheiben 135 und 136 radial nur bis zur Gummischicht 133 erstrecken, werden die auf den inneren Stahlkern 132 wirkenden Schwingungen und Stöße über die Gummischicht 133 gedämpft bzw. absorbiert und nur stark abgeschwächt an den äußeren Stahlmantel 131 und damit an das Rohr 10 weitergegeben. Die beim Befahren des Gleises auftretenden Schwingungen werden dadurch im Fahrleitungsstützpunkt 1 weitestgehend gedämpft bzw. abgebaut, so daß keine gefährlichen Schwingungen auf die Tunneldecke 3 übertragen werden.

Die Länge des Rohres 10 kann der jeweiligen Höhenlage der Stromschiene 2 angepaßt und mit einer Zentrierschraube 19 in der Endlage festgehalten werden. Darüber hinaus kann durch die Zentrierschraube 19 eine Höhenfeineinstellung der Stromschiene 2 vorgenommen werden.

Die Neigungsverstelleinrichtung 14 ist im vorliegenden Ausführungsbeispiel zwischen dem Isolator 9 und dem Rohr 10 angeordnet. Die Neigungsverstellklemme 14 kann jedoch auch zwischen der Stromschienenklemme 7 und dem Isolator 9 angeordnet werden, ohne die Wirkung der Dämpfungseinrichtung 13 (Megibuchse) zu beeinträchtigen. Die Anordnung der Neigungsverstellklemme 14 ist lediglich davon abhängig, an welche Gleisüberhöhungen die Stromschiene 2 anzupassen ist.

Die Neigungsverstelleinrichtung 14 bietet darüber hinaus auch den Vorteil, daß sie unabhängig von ihrer Ausgestaltung auch bei Fahrleitungsstützpunkten ohne Dämpfungseinrichtung 13 eingesetzt werden kann. Die Neigungsverstelleinrichtung 14 liegt dann an ihrer Oberseite direkt am Rohr 10 an.

## Patentansprüche

1. Fahrleitungsstützpunkt (1), der an einen an einer Decke (3) eines Bauwerks befestigbaren Grundkörper (11) und eine in diesem einseitig gehalterte Haltesäule (6) umfaßt, die im wesentlichen aus einem Rohr (10) für die Halterung eines Isolators (9) mit einer an diesem befestigten Fahrdrahtklemme (7) besteht,
**dadurch gekennzeichnet,**
daß die Haltesäule (6) eine Neigungsverstelleinrichtung (14) aufweist, durch die die Fahrdrahtklemme (7) in der Ebene, die von der Längsachse der Haltesäule (6) und der Mittelsenkrechten der Fahrebene gebildet wird, in ihrer Neigung festlegbar ist.

2. Fahrleitungsstützpunkt (1) nach Anspruch 1,
**dadurch gekennzeichnet,**
daß die Neigungsverstelleinrichtung (14) zwischen dem Rohr (10) und dem Isolator (9) angeordnet ist.

3. Fahrleitungsstützpunkt (1) nach Anspruch 1,
**dadurch gekennzeichnet,**
daß die Neigungsverstelleinrichtung (14) zwischen dem Isolator (9) und der Fahrdrahtklemme (7) angeordnet ist.

4. Fahrleitungsstützpunkt (1) nach Anspruch 2,
**dadurch gekennzeichnet,**
daß die Neigungsverstelleinrichtung als Neigungsverstellklemme (14) ausgebildet ist, die im wesentlichen ein erstes und ein zweites Klemmenteil (141,142) umfaßt, wobei das erste Klemmenteil (141) am Rohr (10) und das zweite Klemmenteil (142) am Isolator (9) angeordnet ist.

5. Fahrleitungsstützpunkt (1) nach Anspruch 3,
**dadurch gekennzeichnet,**
daß die Neigungsverstelleinrichtung als Neigungsverstellklemme (14) ausgebildet ist, die im wesentlichen ein erstes und ein zweites Klemmenteil (141,142) umfaßt, wobei das erste Klemmenteil (141) am Isolator (9) und das zweite Klemmenteil (142) an der Fahrdrahtklemme (7) angeordnet ist.

6. Fahrleitungsstützpunkt nach Anspruch 4 oder 5,
**dadurch gekennzeichnet,**
daß die Neigungsverstellklemme (14) um einen in Längsrichtung der Fahrdrahtklemme (7) liegenden Bolzen (15) schwenkbar ist und in ihrer Neigung durch wenigstens zwei Spannelemente (16,17) befestigbar ist.

7. Fahrleitungsstützpunkt (1) nach Anspruch 6,
**dadurch gekennzeichnet,**
daß jedes Klemmenteil (141,142) wenigstens zwei parallel zur Längsachse der Haltesäule (6) verlaufende Durchstecköffnungen zur Durchführung der Spannelemente (16,17) aufweist.

8. Fahrleitungsstützpunkt (1) nach Anspruch 7,
**dadurch gekennzeichnet,**
daß als Spannelement eine durch die Durchstecköffnungen der beiden Klemmenteile (141,142) hindurchgeführte Schraube (16) mit einer Spannmutter (17) vorgesehen ist.
